# EUROPEAN PATENT SPECIFICATION

(11) **EP 4 020 673 B1**
(45) Date of publication and mention of the grant of the patent: **12.08.2026**
(21) Application number: 20876036.3
(22) Date of filing: 14.10.2020
(51) Int. Cl.: H01M 10/658, H01M 10/643, H01M 10/04, H01M 10/0587, H01M 50/107, H01M 50/117, H01M 50/502, H01M 50/119, H01M 50/531, H01M 10/052

(54) **CYLINDRICAL BATTERY AND METHOD FOR MANUFACTURING CYLINDRICAL BATTERY**
ZYLINDRISCHE BATTERIE UND VERFAHREN ZUR HERSTELLUNG EINER ZYLINDRISCHEN BATTERIE
BATTERIE CYLINDRIQUE ET PROCÉDÉ DE FABRICATION D'UNE BATTERIE CYLINDRIQUE

(30) Priority: 14.10.2019 KR 20190127310
(43) Date of publication of application: 29.06.2022
(73) Proprietor: LG ENERGY SOLUTION, LTD., Seoul 07335 (KR)
(72) Inventor: KIM, Mingyu, Daejeon 34122 (KR); SUNG, Joo Hwan, Daejeon 34122 (KR); CHO, Minsu, Daejeon 34122 (KR); PARK, Sunghae, Daejeon 34122 (KR); KIM, Taehyun, Daejeon 34122 (KR); MOON, Minkook, Daejeon 34122 (KR); KIM, Minseon, Daejeon 34122 (KR)
(74) Representative: Goddar, Heinz J.
(86) International application number: PCT/KR2020/013965
(87) International publication number: WO 2021/075832

(56) References cited:
- EP-A1- 1 551 067
- WO-A1-2019/112343
- CN-U- 208 284 520
- JP-A- H01 197 967
- JP-U- S50 129 828
- KR-A- 20000 042 978
- KR-A- 20160 052 425
- KR-A- 20170 110 821
- KR-A- 20180 047 173
- KR-A- 20180 120 406
- KR-B1- 100 322 062
- US-A1- 2016 079 584
- US-A1- 2019 207 198

## Description

### [TECHNICAL FIELD]

### Cross Citation with Related Application(s)

This application claims the benefit of Korean Patent Application No. 10-2019-0127310 filed on October 14, 2019, with the Korean Intellectual Property Office.

The present disclosure relates to a cylindrical battery and a method for manufacturing the same.

### [BACKGROUND ART]

WO 2019 112343 A1 relates to a cylindrical battery cell having a jelly-roll type electrode assembly that generates electric energy and a piezoelectric element.

US 2016/0079584 A1 relates to a rechargeable battery.

KR 100 322 062 B1relates to the can of the secondary battery.

JP S50 129828 U relates to a cylindrical storage battery used for a lamp or the like, which is provided with a screw in the direction of the opening 11 of the cylindrical battery case and is provided with a bag-nut-shaped fastener adapted thereto, and is made of plastic or the like on the surface of the container mouth.

CN 208 284 520 U relates to a high temperature resistant battery for a gas stove.

EP 1 551 067 A1 relates to a battery to be mounted in proximity to a heat generating source, such as in an engine room of an automobile.

JP H01 197967 A relates to a technology for keeping heat of a thermal battery requiring a long operation.

As energy prices are increasing due to the depletion of fossil fuels and increasing attention is being paid to environmental pollution, the demand for environmentally friendly alternative energy sources acts as an essential factor for future life. Thus, research into techniques for generating various kinds of power, such as nuclear energy, solar energy, wind energy, and tidal power, is underway, and power storage apparatuses for more efficient use of the generated energy are also drawing great attention.

Moreover, the demand for batteries as energy sources is rapidly increasing as mobile device technology continues to develop and the demand for such mobile devices continues to increase. Accordingly, much research on batteries capable of satisfying various needs has been carried out. In particular, in terms of the material for batteries, the demand for lithium secondary batteries, such as lithium-ion batteries and lithium-ion polymer batteries, which have advantages such as high energy density, discharge voltage, and output stability, is very high.

The secondary battery may be classified based on the structure of an electrode assembly having a structure in which a positive electrode and a negative electrode are stacked with a separator being interposed between therebetween. For example, the electrode assembly may include a jelly-roll (wound) type electrode assembly in which a long sheet type positive electrode and a long sheet type negative electrode are wound with a separator being interposed therebetween, a stacked (laminated) type electrode assembly in which pluralities of positive electrodes and negative electrodes cut to a predetermined size are sequentially stacked with separators being interposed therebetween, and the like. In recent years, in order to solve problems caused by the jelly-roll type electrode assembly and the stacked type electrode assembly, there has been developed a stacked/folded type electrode assembly, which is a combination of the jelly-roll type electrode assembly and the stacked type electrode assembly, having an improved structure in which predetermined numbers of positive electrodes and negative electrodes are sequentially stacked with separators being interposed therebetween to constitute a unit cell, after which a plurality of unit cells is sequentially wound in the state of having been placed on a separation film.

These electrode assemblies are housed in a pouch case, a cylindrical can, a prismatic case, and the like depending on the purpose of use, thereby producing a battery.

Among them, the cylindrical battery has the advantages of being easy to manufacture and having a high energy density per weight, and thus, is used as an energy source for various devices ranging from portable computers to electric vehicles.

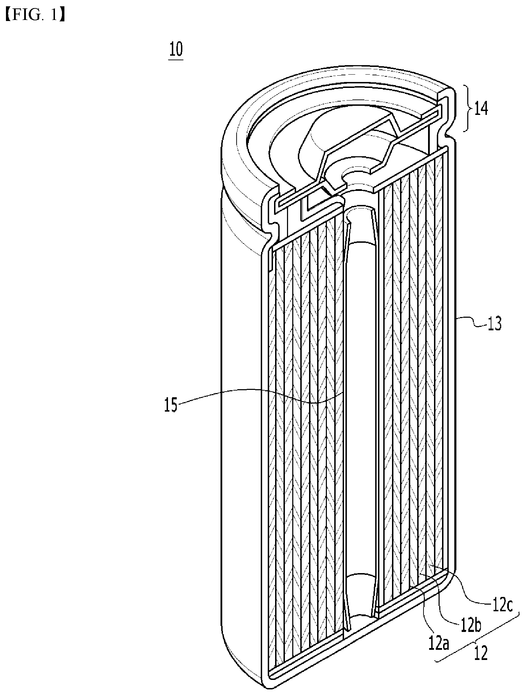

FIG. 1 is a schematic diagram illustrating a conventional cylindrical battery.

Referring to FIG. 1, the cylindrical battery 10 is manufactured by housing a jelly-roll type electrode assembly 12 in a cylindrical case 13, injecting an electrolyte solution in the cylindrical case 13, and coupling a top cap 14 to an opened upper end of the cylindrical case 13. The jelly-roll type electrode assembly 12 has a structure, in which a positive electrode 12a, a separator 12b and a negative electrode 12c are sequentially stacked to be wound in a round shape. A cylindrical center pin 15 is inserted into a central part of the electrode assembly 12. The center pin 15 functions to fix and support the electrode assembly 12, and also functions as a passage for discharging a gas generated through internal reactions during charging/discharging and operation.

Since the cylindrical case 13 of such a conventional cylindrical battery 10 has a singlelayer structure made of a metal material, heat is easily discharged to the outside. Therefore, when the cylindrical battery 10 is used in a low-temperature environment, an internal heat generated in a charge and discharge process is easily discharged to the outside, which causes a problem that the performance of the battery is rapidly reduced.

WO 2019/112343 A1, US 2016/079584 A1, KR 100 322 062 B1 and JP S50 129828 U relate to cylindrical batteries.

### [DETAILED DESCRIPTION OF THE INVENTION]

### [Technical Problem]

It is an object of the present disclosure to provide a cylindrical battery provided with a battery case having excellent heat insulating properties.

However, the problem to be solved by the embodiment of the present disclosure is not limited to the above-mentioned problem and can be variously expanded within the scope of the technical idea included in the present disclosure.

### [Technical Solution]

A cylindrical batter according to one embodiment of the present disclosure includes: an electrode assembly; and a battery case which houses the electrode assembly and is formed of a resin.

The battery case includes an upper case, a side case and a lower case, and a hollow may be formed in the side case.

The side case includes an inner case and an outer case.

The hollow is formed between the inner case and the outer case.

The lower case includes a terminal connection part.

A stepwise-type step is formed on the side surface of the terminal connection part.

The lower case includes a mounting space corresponding to the shape of the terminal connection part.

The terminal connection part is made of a metal material.

A negative electrode tab of the electrode assembly is electrically connected to the terminal connection part.

The upper case may include a first coupling part.

The side case may include a second coupling part.

The first coupling part may be a latch.

The second coupling part may include a groove to which the latch is fastened.

The first coupling part may include a screw thread or a screw valley.

The second coupling part may include a screw thread or a screw valley that is coupled to the screw thread or the screw valley of the first coupling part.

A method for manufacturing the cylindrical battery may include the steps of: manufacturing an upper case; connecting the upper case to a side case, and connecting a terminal connection part to a lower case.

The upper case may be fastened to the side case in snap-fit manner.

The upper case may be coupled to the side case by a screw thread/screw valley coupling method.

The upper case may be manufactured by injection molding.

The terminal connection part moves in a direction in which gravity acts in the housing part of the battery case to be mounted in a mounting space in the lower case.

### [ADVANTAGEOUS EFFECTS]

As described above, the cylindrical battery according to the embodiment of the present disclosure can exhibit excellent heat insulating properties by including a battery case formed of a resin and having a hollow formed therein.

### [BRIEF DESCRIPTION OF THE DRAWINGS]

FIG. 1 is a schematic view showing a conventional cylindrical battery.
FIG. 2 is a schematic view showing a cylindrical battery according to an embodiment of the present disclosure.
FIG. 3 is a schematic diagram showing that the terminal connection part of FIG. 2 is coupled.
FIG. 4 is a schematic view showing a cylindrical battery according to another embodiment of the present disclosure.
FIG. 5 is a schematic view showing that the upper case of FIG. 4 is separated.
FIG. 6 is a schematic view showing a cylindrical battery according to yet another embodiment of the present disclosure.
FIG. 7 is a schematic view showing that the upper case of FIG. 6 is separated.

### [DETAILED DESCRIPTION OF THE EMBODIMENTS]

Hereinafter, various embodiments of the present disclosure will be described in detail with reference to the accompanying drawings so that those skilled in the art can easily implement them.

Further, throughout the specification, when a portion is referred to as "comprising" or "including" a certain component, it means that the portion can further include other components, without excluding the other components, unless otherwise stated.

Further, throughout the specification, the "hollow" means an empty space in a vacuum state.

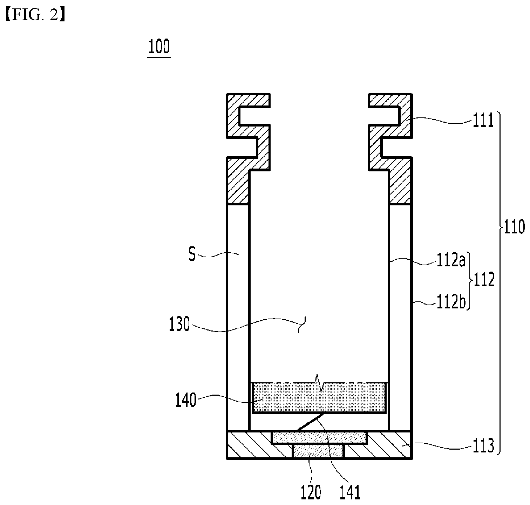

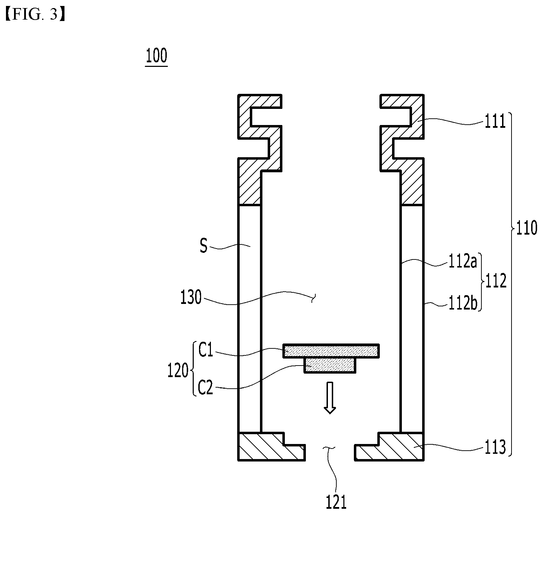

FIG. 2 is a vertical cross-sectional view showing a cylindrical battery according to an embodiment of the present disclosure. FIG. 3 is a schematic diagram showing that the terminal connection part of FIG. 2 is coupled.

Referring to FIGS. 2 and 3, the cylindrical battery 100 may include a top cap (not shown), a battery case 110, a terminal connection part 120, and an electrode assembly 140. The electrode assembly 140 is housed inside the battery case 110. For convenience of description, a part of the electrode assembly 140 is not shown in the figure.

The top cap may be mounted on the top of the electrode assembly 140. The top cap may have a structure including a safety vent (not shown) and an electric power interrupting device (not shown). Further, the top cap may have a structure that does not include the safety vent and the electric power interrupting device.

The battery case 110 includes an upper case 111, a side case 112 , and a lower case 113 . The side case 112 includes an inner case 112a and an outer case 112b.

The battery case 110 is formed of a resin. The resin is not particularly limited, but for example, it may be Teflon. Since the battery case 110 formed of a resin has lower thermal conductivity than a metal can, heat generated in the charging/discharging process of the cylindrical battery 100 may be maintained in the cylindrical battery 100 for a longer period of time.

The upper case 111 may have a shape in which the beading process has already been completed. Because such shape can be manufactured by injection molding, the manufacturing process of the cylindrical battery 100 may be simplified. The upper case 111 may be formed as a single layer. Further, the upper case may have a structure connected to the inner case 112a and the outer case 112b.

The inner case 112a is located on the housing part 130 side in which the electrode assembly is housed, and the outer case 112b may have a structure exposed to the outside in a form surrounding the inner case 112a. The inner case 112a and the outer case 112b may have a cylindrical shape, and the diameter of the inner case 112a may be formed smaller than the diameter of the outer case 112b. A space S spaced apart by a predetermined distance is formed between the inner case 112a and the outer case 112b. The space S may be hollow. The space S maintained in a vacuum state has a lower thermal conductivity than the metal can structure formed as a single layer, so that an excellent heat insulating effect can be exhibited. Therefore, heat generated in the charging/discharging process of the cylindrical battery 100 may be maintained in the inside of the cylindrical battery 100 for a long period of time.

The lower case 113 may have a structure connected to the inner case 112a and the outer case 112b. The inner case 112a and the outer case 112b may be formed on the edge part of the lower case 113. The lower case 113 may be formed as a single layer. Further, a terminal connection part 120 may be formed in the central part of the lower case 113. In addition, the lower case 113 has a structure in which a mounting space 121 corresponding to the shape of the terminal connection part 120 is formed.

The terminal connection part 120 is formed of a metal material. A negative electrode tab 141 of the electrode assembly 140 is electrically connected to the terminal connection part 120. Therefore, the terminal connection part 120 may be a negative electrode terminal of the cylindrical battery 100.

The terminal connection part 120 may have a shape in which two or more low-height cylinders are stacked. Because the cylinders have different cross-sectional diameters, the side surface of the terminal connection part 120 may have a structure in which a stepwise-type step is formed. In one example, the terminal connection part 120 may have a structure in which a cylinder C1 having a large cross-sectional diameter is stacked on a cylinder C2 having a small cross-sectional diameter. Therefore, the terminal connection part 120 may move in a direction in which gravity acts in the housing part 130 to be mounted in the mounting space 121.

The terminal connection part 120 and the mounting space 121 may be coupled through various connection structures. In one example, a connection part between the terminal connection part 120 and the mounting space 121 may be coupled to each other by forming a screw thread and a screw valley. Further, rubber O-rings may be included at a connection part between the terminal connection part 120 and the mounting space 121. Through the above coupling, it is possible to prevent the electrolyte solution from leaking to the outside.

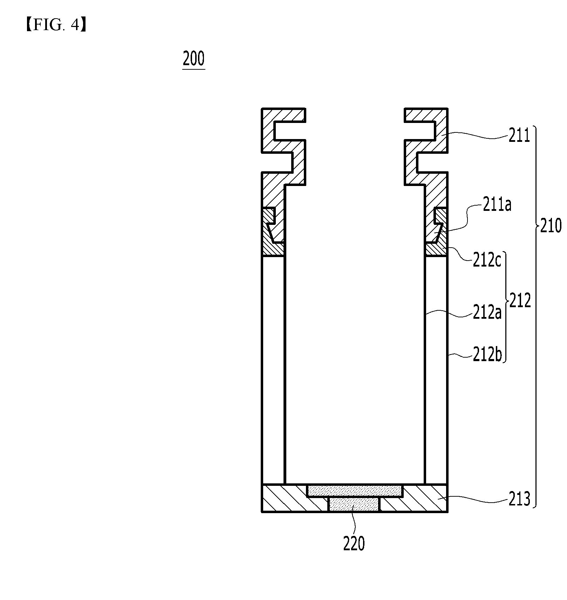

FIG. 4 is a schematic view showing a cylindrical battery according to another embodiment of the present disclosure.

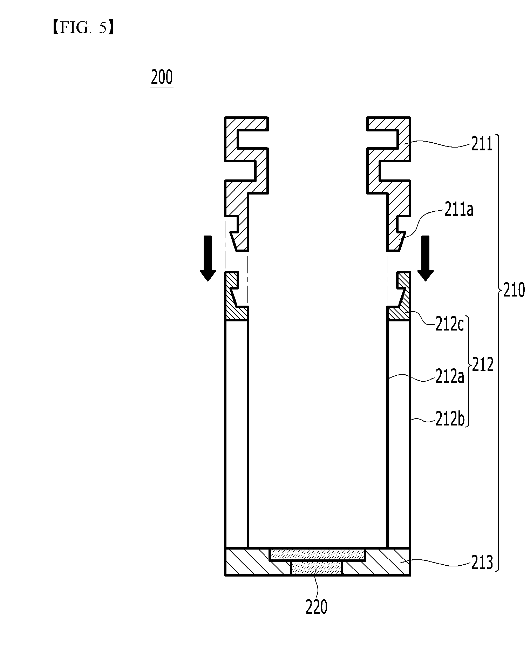

FIG. 5 is a schematic view showing that the upper case of FIG. 4 is separated.

Referring to FIGS. 4 and 5, the cylindrical battery 200 may include a top cap (not shown), a battery case 210, a terminal connection part 220, and an electrode assembly (not shown). The battery case 210 includes an upper case 211, a side case 212, and a lower case 213.

The upper case 211 may include a first coupling part 211a. The upper case 211 may be coupled to the side case 212 via the first coupling part 211a. The first coupling part 211a may be a latch.

The side case 212 may include an inner case 212a, an outer case 212b, and a second coupling part 212c. The side case 212 may be coupled to the upper case 211 via the second coupling part 212c. The second coupling part 212c may include a groove structure capable of coupling with the latch.

According to such a structure, the upper case 211 and the side case 212 may be fastened in snap-fit manner. This has the effect of simplifying the manufacturing process of the cylindrical battery 200.

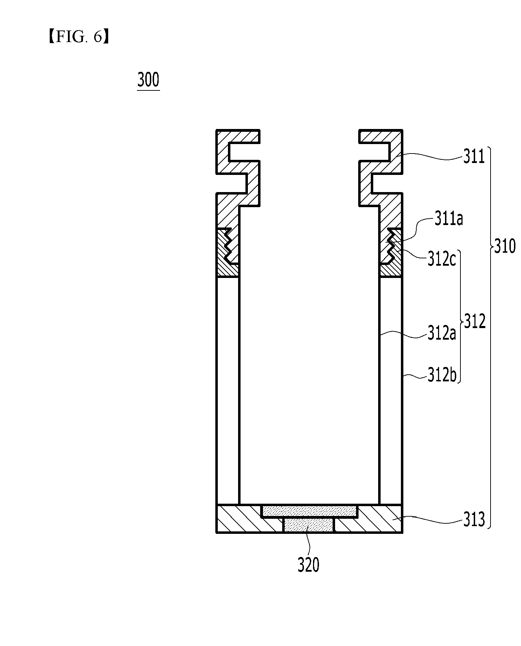

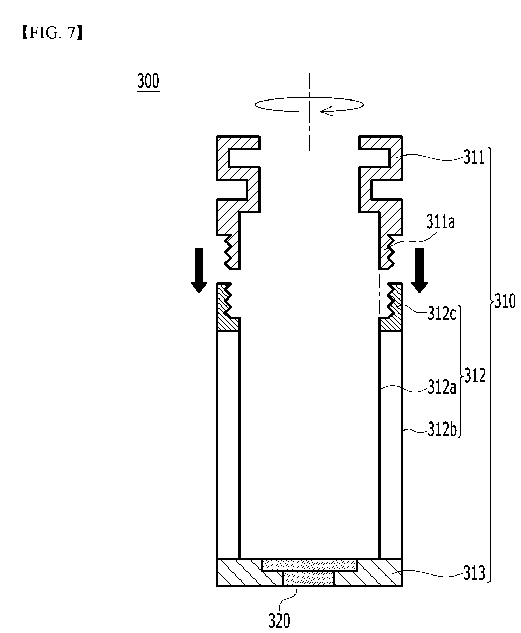

FIG. 6 is a schematic view showing a cylindrical battery according to yet another embodiment of the present disclosure. FIG. 7 is a schematic view showing that the upper case of FIG. 6 is separated.

Referring to FIGS. 6 and 7, the cylindrical battery 300 may include a top cap (not shown), a battery case 310, a terminal connection part 320, and an electrode assembly (not shown). The battery case 310 includes an upper case 311, a side case 312, and a lower case 313. The side case 312 includes an inner case 312a and an outer case 312b.

The upper case 311 may include a first coupling part 311a. The upper case 311 may be coupled to the side case 312 via the first coupling part 311a. The first coupling portion 311a may include a screw thread or a screw valley.

The side case 312 may include an inner case 312a, an outer case 312b, and a second coupling part 312c. The side case 312 may be coupled to the upper case 311 via the second coupling part 312c. The second coupling portion 312c may include a screw thread or a screw valley.

According to such as structure, the upper case 311 can be rotated and coupled to the side case 312. This has the effect of simplifying the manufacturing process of the cylindrical battery 300. In addition, the upper case 311 can be easily separated from the side case 312 if necessary.

## Claims

1. A cylindrical battery (100, 200, 300) comprising:
an electrode assembly (140); and
a battery case (110, 210, 310) which houses the electrode assembly (140) and is formed of a resin,
wherein the battery case (110, 210, 310) includes an upper case (111, 211, 311), a side case (112, 212, 312) and a lower case (113, 213, 313), wherein:
the lower case (113, 213, 313) includes a terminal connection part (120, 220, 320), wherein a stepwise-type step is formed on the side surface of the terminal connection part (120, 220, 320), and wherein the lower case (113, 213, 313) includes a mounting space (121, 221, 321) corresponding to the shape of the terminal connection part (120, 220, 320), wherein
the terminal connection part (120, 220, 320) is formed of a metal material, and a negative electrode tab (141) of the electrode assembly (140) is electrically connected to the terminal connection part (120, 220, 320), wherein
the side case (112, 212, 312) includes an inner case (112a, 212a, 312a) and an outer case (112b, 212b, 312b), and
wherein a hollow is formed in the side case (112, 212, 312) between the inner case (112a, 212a, 312a) and the outer case (112b, 212b, 312b), wherein the hollow is an empty space (S) in a vacuum state.

2. The cylindrical battery (100, 200, 300) of claim 1, wherein:
the upper case (111, 211, 311) includes a first coupling part (211a, 311a).

3. The cylindrical battery (100, 200, 300) of claim 2, wherein:
the side case (112, 212, 312) includes a second coupling part (212c, 312c).

4. The cylindrical battery (100, 200, 300) of claim 2, wherein:
the first coupling part (211a, 311a) is a latch.

5. The cylindrical battery (100, 200, 300) of claims 3 and 4, wherein:
the second coupling part (212c, 312c) includes a groove to which the latch is fastened.

6. The cylindrical battery (100, 200, 300) of claim 2, wherein:
the first coupling part (211a, 311a) includes a screw thread or a screw valley.

7. The cylindrical battery (100, 200, 300) of claim 6, wherein:
the second coupling part (212c, 312c) includes a screw thread or a screw valley that is coupled to the screw thread or the screw valley of the first coupling part (211a, 311a).

8. A method for manufacturing the cylindrical battery (100, 200, 300) of claim 1, the method comprising the steps of:
manufacturing an upper case (111, 211, 311);
connecting the upper case (111, 211, 311) to a side case (112, 212, 312), and
connecting a terminal connection part (120, 220, 320) to a lower case (113, 213, 313).

9. The method of claim 8, wherein:
the upper case (111, 211, 311) is fastened to the side case (112, 212, 312) by snap-fit manner or by a screw thread/screw valley coupling method.

## Patentansprüche

1. Eine zylindrische Batterie (100, 200, 300), umfassend:
eine Elektrodenbaugruppe (140); und
ein Batteriegehäuse (110, 210, 310), das die Elektrodenbaugruppe (140) aufnimmt und aus einem Harz gebildet ist,
wobei das Batteriegehäuse (110, 210, 310) ein oberes Gehäuse (111, 211, 311), ein Seitengehäuse (112, 212, 312) und ein unteres Gehäuse (113, 213, 313) umfasst, wobei:
das untere Gehäuse (113, 213, 313) ein Anschlussteil (120, 220, 320) umfasst, wobei an der Seitenfläche des Anschlussteils (120, 220, 320) eine Stufe vom schrittweisen Typ ausgebildet ist, und wobei das untere Gehäuse (113, 213, 313) einen der Form des Anschlussteils (120, 220, 320) entsprechenden Einbauraum (121, 221, 321) aufweist, wobei
das Anschlussteil (120, 220, 320) aus einem metallischen Material gebildet ist und eine negative Elektrodenlasche (141) der Elektrodenbaugruppe (140) elektrisch mit dem Anschlussteil (120, 220, 320) verbunden ist, wobei
das Seitengehäuse (112, 212, 312) ein Innengehäuse (112a, 212a, 312a) und ein Außengehäuse (112b, 212b, 312b) umfasst, und
wobei in dem Seitengehäuse (112, 212, 312) zwischen dem Innengehäuse (112a, 212a, 312a) und dem Außengehäuse (112b, 212b, 312b) ein Hohlraum ausgebildet ist, wobei der Hohlraum ein leerer Raum (S) im Vakuumzustand ist.

2. Die zylindrische Batterie (100, 200, 300) nach Anspruch 1, wobei:
das obere Gehäuse (111, 211, 311) ein erstes Kupplungsteil (211a, 311a) aufweist.

3. Die zylindrische Batterie (100, 200, 300) nach Anspruch 2, wobei:
das Seitengehäuse (112, 212, 312) ein zweites Kupplungsteil (212c, 312c) aufweist.

4. Die zylindrische Batterie (100, 200, 300) nach Anspruch 2, wobei:
das erste Kupplungsteil (211a, 311a) ein Riegel ist.

5. Die zylindrische Batterie (100, 200, 300) nach den Ansprüchen 3 und 4, wobei:
das zweite Kupplungsteil (212c, 312c) eine Nut aufweist, in der der Riegel befestigt wird.

6. Die zylindrische Batterie (100, 200, 300) nach Anspruch 2, wobei:
das erste Kupplungsteil (211a, 311a) ein Schraubgewinde oder eine Schraubnut aufweist.

7. Die zylindrische Batterie (100, 200, 300) nach Anspruch 6, wobei:
das zweite Kupplungsteil (212c, 312c) ein Gewinde oder eine Gewindenut aufweist, das bzw. die mit dem Gewinde oder der Gewindenut des ersten Kupplungsteils (211a, 311a) in Eingriff steht.

8. Verfahren zur Herstellung der zylindrischen Batterie (100, 200, 300) nach Anspruch 1, wobei das Verfahren die folgenden Schritte umfasst:
Herstellen eines oberen Gehäuses (111, 211, 311);
Verbinden des oberen Gehäuses (111, 211, 311) mit einem Seitengehäuse (112, 212, 312) und
Verbinden eines Anschlussteils (120, 220, 320) mit einem unteren Gehäuse (113, 213, 313).

9. Verfahren nach Anspruch 8, wobei:
das obere Gehäuses (111, 211, 311) durch Einrasten oder durch ein Gewinde-/Gewindenut-Verbindungsverfahren an dem Seitengehäuse (112, 212, 312) befestigt wird.

## Revendications

1. Batterie cylindrique (100, 200, 300) comprenant :
un ensemble d'électrodes (140) ; et
un boîtier de batterie (110, 210, 310) contenant l'ensemble d'électrodes (140) et étant composé d'une résine,
le boîtier de batterie (110, 210, 310) comprenant un boîtier supérieur (111, 211, 311), un boîtier latéral (112, 212, 312) et un boîtier inférieur (113, 213, 313),
le boîtier inférieur (113, 213, 313) comprenant un élément de connexion de borne (120, 220, 320), un palier du type graduel étant formé sur la surface latérale de la partie de connexion de borne (120, 220, 320), et le boîtier inférieur (113, 213, 313) comprenant un espace de montage (121, 221, 321) correspondant à la forme de la partie de connexion de borne (120, 220, 320),
la partie de connexion de borne (120, 220, 320) étant constituée d'un matériau métallique, et une languette d'électrode négative (141) de l'ensemble électrodes (140) étant connectée électriquement à la partie de connexion de borne (120, 220, 320),
le boîtier latéral (112, 212, 312) comprenant un boîtier intérieur (112a, 212a, 312a) et un boîtier extérieur (112b, 212b, 312b), et
un creux étant formé dans le boîtier latéral (112, 212, 312) entre le boîtier intérieur (112a, 212a, 312a) et le boîtier extérieur (112b, 212b, 312b), le creux étant un espace vide (S) dans un état sous vide.

2. Batterie cylindrique (100, 200, 300) selon la revendication 1,
le boîtier supérieur (111, 211, 311) comprenant un premier élément de couplage (211a, 311a).

3. Batterie cylindrique (100, 200, 300) selon la revendication 2,
le boîtier latéral (112, 212, 312) comprenant un deuxième élément de couplage (212c, 312c).

4. Batterie cylindrique (100, 200, 300) selon la revendication 2,
le premier élément de couplage (211a, 311a) étant un loquet.

5. Batterie cylindrique (100, 200, 300) selon les revendications 3 et 4,
le deuxième élément de couplage (212c, 312c) comprenant une rainure sur laquelle le loquet est fixé.

6. Batterie cylindrique (100, 200, 300) selon la revendication 2,
le premier élément de couplage (211a, 311a) comprenant un filetage ou un creux de filetage.

7. Batterie cylindrique (100, 200, 300) selon la revendication 6,
le deuxième élément de couplage (212c, 312c) comprenant un filetage ou un creux de filetage couplé au filetage ou au creux de filetage du premier élément de couplage (211a, 311a).

8. Procédé de fabrication d'une batterie cylindrique (100, 200, 300) selon la revendication 1, le procédé comprenant les étapes de :
fabrication d'un boîtier supérieur (111, 211, 311) ;
connexion du boîtier supérieur (111, 211, 311) à un boîtier latéral (112, 212, 312), et
connexion d'un élément de connexion de borne (120, 220, 320) à un boîtier inférieur (113, 213, 313).

9. Procédé selon la revendication 8,
le boîtier supérieur (111, 211, 311) étant fixé au boîtier latéral (112, 212, 312).par encliquetage ou par un procédé de couplage de filet de vis/creux de filetage
